# NEW EUROPEAN PATENT SPECIFICATION

(11) **EP 0 294 041 B2**
(45) Date of publication and mention of the opposition decision: **29.08.2007**
(45) Mention of the grant of the patent: 26.06.1996
(21) Application number: 88304241.8
(22) Date of filing: 11.05.1988
(51) Int. Cl.: C09D 9/00

(54) **Aqueous-based composition for removing coatings**
Zusammensetzung auf Wasserbasis zur Entfernung von Überzügen
Composition à base aqueuse pour enlever les revêtements

(30) Priority: 04.06.1987 US 58162
(43) Date of publication of application: 07.12.1988
(73) Proprietor: MINNESOTA MINING AND MANUFACTURING COMPANY, St. Paul, Minnesota 55133-3427 (US)
(72) Inventor: Pokorny, Richard J. c/o Minnesota Mining and, P.O. Box 33427 St. Paul Minnesota 55133 (US)
(74) Representative: Vossius & Partner

(56) References cited:
- DE-A- 3 438 399
- JP-A- 57 083 598

## Description

This invention relates to compositions for removing coatings from surfaces.

Compositions for removing paints, varnishes, and other coatings have been available for many years. Most of these compositions fall within two general classes. The first type attacks the coating by the chemical action of the ingredients thereof, which generally comprise alkalis or acids. This type of paint remover comprises alkali and acid compositions, such as those described in U.S. Patent Nos. 3,681,250, 3,615,825 and 3,972,839. These alkali or acid compositions require considerable after treatment to insure complete removal of the alkali or acid, and have been found to discolor wood. The second type depends upon the solvent power of the constituents of the composition to dissolve or at least soften the coatings. In the second type, it is customary to use aromatic hydrocarbons, lower aliphatic esters, ketones, alcohols, chlorinated solvents, or similar organic solvents. However, the vapor pressure of such liquids is high, with the result that it is difficult to keep the paint or lacquer surface wet with the liquid solvent. It has been proposed to overcome this difficulty by adding paraffin wax to such liquid organic solvents to reduce their evaporation rate and thus prolong their contact with the coating to be removed, so that the coating may be sufficiently softened to allow it to be scraped off easily. However, the paraffin wax must be removed in a subsequent step. Although these solvents have received wide usage and have been found to have acceptable stripping qualities, their use is being questioned on the grounds of the health and safety hazards they present to the environment and to the users thereof. U.S. Patent No. 4,120,810 discloses the use of N-methyl 2-pyrrolidone and a mixture of aromatic hydrocarbons having more than six carbon atoms as a paint stripper effective on a wide range of surfaces and capable of penetrating more layers of paint per application primarily because of its slow evaporation rate. This material suffers from the high cost of raw materials and the suspected toxic effects of the aromatic materials used.

U.S. Patent No. 4,508,634 discloses a composition for removing paint, grease, dirt and other foreign material from the skin which includes 10-40 wt% propylene carbonate, 10-50 wt% water, 1-30 wt% organic cosolvent, 0.5-12 wt% surfactants, 0.1-5 wt% thickening agents, and other minor ingredients. The cosolvent may be selected from a group including mono- and poly-hydric alcohols, polyethylene and polypropylene glycols, and esters of aliphatic mono- and di basic acids. Although this composition is effective, it has a shelf life that does not generally exceed six months. This limited shelf life is due to the presence of propylene carbonate.

Japanese Patent Publication No. 57-83598 (Horibe et al.), discloses a liquid detergent to remove oils and organic materials from hard surfaced materials which includes 1-20 wt% succinic acid diesters, 0.1-5 wt% anionic surfactants, 1-40 wt% nonionic surfactant, and 60-95 wt% water.

DE-C-3,438,399 discloses a paint-stripping agent comprising C₁ to C₄ alkyl esters of succinic and/or glutaric and/or adipic acid, a thickener and a small proportion of water. The only composition specifically disclosed comprises 5% water, and this is reproduced as Comparative Example B hereinbefore.

The present invention provides a stable emulsion for rendering organic polymer coatings removable from vertical surfaces consisting essentially of (1) at least 10% by weight of at least one dibasic ester, (2) at least 50% by weight of water, and (3) at least one thickening agent selected from water soluble and water swellable thickening agents.

In accordance with another aspect of the invention, a stable emulsion is used for rendering organic polymer coatings removable from vertical surfaces, the emulsion consisting essentially of a dibasic ester, at least 50% by weight of water and at least one thickening agent selected from water-soluble and water-swellable thickening agents.

Preferred embodiments of the invention are defined in the dependent claims.

The emulsion of the present invention contains sufficient water to cause the mixture to wet out and adhere to vertical surfaces for a sufficiently long period to ensure that the dibasic ester will have sufficient duration of contact with the coating or finish to allow removal of same. As mentioned earlier the emulsion contains at least 50% by weight water.

By combining the dibasic ester or esters with the water and a small amount of thickening agent, the emulsion formed thereby remains stable and the effectiveness of the dibasic ester or esters as a solvent is only slightly reduced from what it would have been if the ester or esters had not been diluted with water.

The composition is effective on a wide range of coatings and surfaces. The composition is useful for rendering organic polymeric coatings and finishes such as paints, varnishes, lacquers, shellacs, gums, natural and synthetic resins removable from such surfaces as wood, metal, and plastic. The composition has also been found to be effective for removing paints, inks, and grease from skin. An important feature of the composition is that it provides excellent results without the need of evaporation retardants or film-forming compounds. Thus, there is no need to include in the formulation such evaporation retardants, as paraffin wax which have the disadvantage that they need to be removed in subsequent steps. Another feature of the composition is that it has a shelf life in excess of one year.

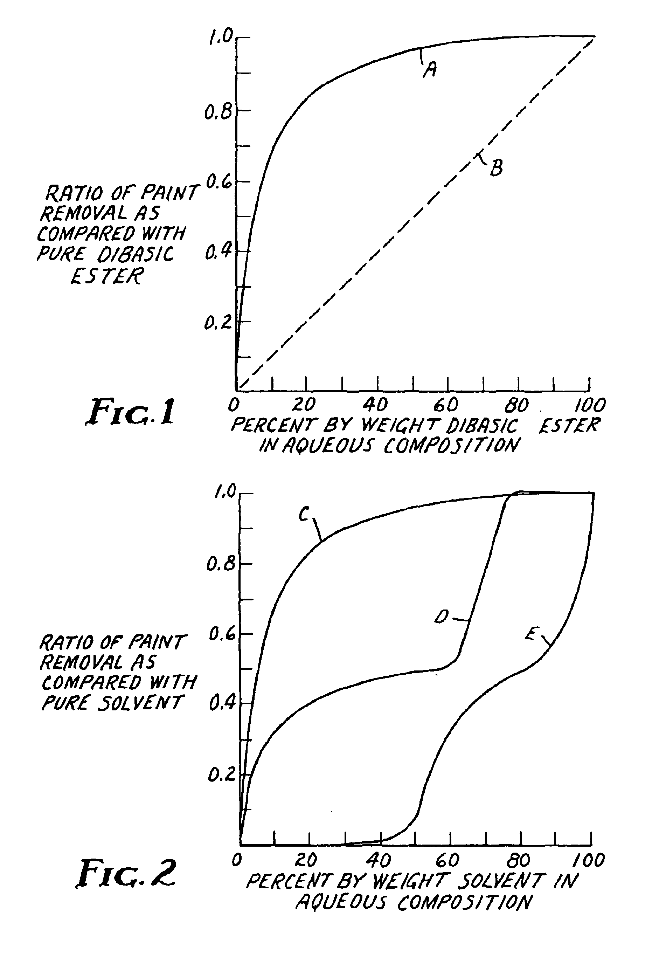

Preferred embodiments of the invention are described below by way of example only with reference to Figures 1 and 2 of the accompanying drawings, wherein:
FIG. 1 is a graph that compares actual rate of paint removal to expected rate of pain removal for various concen-trations of aqueous dibasic ester emulsions, and
FIG 2 is a graph that compares relative rate of paint removal for various aqueous solvent mixtures.

Dibasic esters are the active ingredient in the composition of the present invention. It is the dissolving property of dibasic esters that is essential for removal of paint and other coatings. Generally, dibasic esters that can be used in the composition of this invention include aliphatic diesters having a molecular weight of up to about 200 for example. More than one dibasic ester can be used in the compositions of this invention. These diesters are well-known in the art and are commercially available. Commercially available diesters that are suitable for the present invention are the DuPont Dibasic Esters (DBEs), available from E.I. du pont de Nemours and Co. Dibasic esters that are preferred for the composition of the present invention are esters derived from adipic acid (COOH(CH₂)₄COOH), glutaric acid (COOH (CH₂)₃COOH), and succinic acid (COOH(CH₂)₂COOH). Two or all three of the esters of these acids can for example be employed in the composition of this invention. Both dimethyl esters and diethyl esters of these acids can for example be used effectively in the composition of this invention.

The purpose of the water is to aid the dibasic ester in wetting out and adhering to surfaces, particularly vertical surfaces, in order to allow the dibasic ester to soften the coating on the surface.

The purpose of the thickening agent or agents is to stabilize the ester/water emulsion and provide good flow control, i.e. the presence of thickening agent allows the composition to be applied easily, level out, and have the ability to cling to vertical surfaces. The thickening agent must be soluble in water or swellable in water and must be capable of promoting formation of a stable emulsion of the composition of this invention. Thickening agents that are preferred for the composition of the present invention include gums, e.g. xanthan, guar, locust bean, alginates, polyvinyl alcohol, polyacrylates, starches, clay derivatives, e.g. amine treated magnesium aluminum silicate, and cellulose derivatives, e.g. hydroxypropyl methylcellulose. The thickening agents that are most preferred are the clay derivatives, cellulose derivatives, and xanthan gum.

It is preferred, but not necessary, to include surfactants in the composition of the present invention in order to stabilize the emulsion and aid in wetting out oil-based paints. Surfactants that are useful in the composition of the present invention include nonionic and anionic surfactants having an HLB value of at least 10.

Other additives that are useful in the composition of the present invention include N-methyl pyrrolidone or benzyl alcohol (which are polar co-solvents), and abrasive particles such as aluminium oxide, silicon carbide, pumice.

The amount of dibasic ester or esters must be sufficient to ensure effective removal of coatings from surfaces. The amount of thickening agent or agents must be sufficient to allow the water and dibasic ester component to form a stable emulsion.

The amount of thickening agent can range from 0.5% by weight to 4.0% by weight, for example. The composition can also contain up to 2.0% by weight surfactant; for example.

The composition of this invention can be prepared by first adding thickening agents and other additives to water, then adding surfactant, if desired, and dibasic ester or esters to the resulting mixture. The mixture can then be mixed vigorously in order to form an emulsion.

While the dibasic esters are known to be capable of removing paint by themselves, their low viscosities render them unsuitable for use on vertical surfaces. They tend to run off the surface before they are able to soften the coating to be removed. The presence of water and thickening agent renders the total composition capable of wetting out and adhering to vertical surfaces for a period of time sufficient to bring about softening of paint coatings. Yet, the presence of water and thickening agent does not reduce the efficacy of the dibasic esters as a paint remover. This is in contrast to a known use of the dibasic ester solvent as a coalescing agent in latex compositions (see "Solvent Formulations for Industrial Finishes", Industrial Finishing, March, 1984, p. 27-20). Furthermore, the presence of water allows the expensive dibasic esters to be used as a paint remover.

The composition of this invention can also be used as a skin cleaner for removal of such materials as paints, varnishes, stains, inks, grease, etc.

In order to enhance the cleaning properties of the composition, a nonwoven material, such as a Buf Puf^{R} cleaning pad or one of the Brushlon^{R} abrasive products such as the Scrubteam^{R} brush or the short trim Brushlon^{R} brush, can be used to abrade the coatings to be removed.

The shelf life of the composition of this invention has been found to be in excess of one year.

The following examples are set forth to illustrate this invention and are not intended to limit the scope thereof.

### Example 1

The following ingredients in the amounts indicated were used to prepare a composition of this invention:

| Ingredient | Amount (parts by weight) |
|---|---|
| Clay thickening agent (amine treated magnesium aluminum silicate, "Veegum Pro", available from R. T. Vanderbilt Co., Inc., Norwalk, CT) | 0.8 |
| Cellulose thickening agent (hydroxypropyl methylcellulose, "Methocel K15MS", available from Dow Chemical Co., Midland, MI) | 1.0 |
| Surfactant (polypropylene oxide-polyethylene oxide copolymer, "Pluronic P104", available from BASF Wyandotte Corp. Wyandotte, MI) | 0.05 |
| Dibasic ester (DBE-3, a mixture containing 89% dimethyl adipate, 10% dimethyl glutarate, 0.5% dimethyl succinate, 0.1 % methanol, available from E. I. du Pont de Nemours and Co., Wilmington, DE) | 24.5 |
| Water | 73.65 |

The clay thickening agent was added to the water and the mixture stirred at a constant rate at 78°C for 30 minutes. The cellulose thickener was then added with stirring and the resulting mixture was stirred for an additional 10 minutes. The surfactant was then added along with the dibasic ester. The mixture was then cooled to 50°C and then poured into a closed container. The mixture was allowed to cool to room temperature before being tested on painted surfaces.

The composition was used to remove the follnwing coatings:
20 year old latex paint
very old varnish
nitrocellulose lacquer
new latex paint
clear varnish
polyurethane varnish
baked oil enamel
All of these coatings were softened by the composition and could be removed in one hour or less. Removal of multiple coatings of baked oil enamels required approximately three hours.

### Examples 2 - 8

The following table sets forth ingredients and the amounts thereof used to prepare compositions within the scope of this invention. The compositions were prepared in the same manner as in Example 1, with the exception that xanthan gum was added at the same time as the cellulose thickener.

**Table I**

| | Amount (parts by weight) | | | | | | | Control A | Control |
|---|---|---|---|---|---|---|---|---|---|
| Ingredient | 2 | 3 | 4 | 5 | 6 | 7 | 8 | | |
| Clay thickening agent¹ | 0.16 | 0.27 | 0.25 | 0.25 | 0.25 | 0.25 | 0.20 | -- | -- |
| Clay thickening agent² | -- | -- | -- | -- | -- | -- | -- | 1.0 | -- |
| Cellulose thickening agent ³ | 0.37 | 0.65 | 0.58 | 0.59 | 0.59 | 0.5 | 0.49 | 1.0 | -- |
| Xanthan gum⁴ | 0.53 | 0.92 | 0.82 | 0.79 | 0.79 | 0.79 | 0.69 | -- | -- |
| Dibasic ester⁵ | 49.5 | 9.8 | 19.7 | -- | -- | -- | 4.9 | -- | -- |
| Dibasic ester⁶ | -- | -- | -- | 24.6 | -- | -- | -- | -- | 100 |
| Dibasic ester⁷ | -- | -- | -- | -- | 24.6 | -- | -- | -- | -- |
| Dibasic ester⁸ | -- | -- | -- | -- | -- | 24.6 | -- | -- | -- |
| Surfactant⁹ | 0.1 | 0.1 | 0.1 | 0.1 | 0.1 | 0.1 | 0.1 | 0.07 | -- |
| Water | 49.34 | 88.26 | 78.55 | 73.67 | 73.67 | 73.67 | 93.62 | 97.93 | -- |

| | | | | | | | | | |
|---|---|---|---|---|---|---|---|---|---|
| ¹Colloidal magnesium aluminum silicate, "Veegum T", available from R. T. Vanderbilt Co., Inc. ²Amine treated magnesium aluminum silicate, "Veegum Pro", available from R. T. Vanderbilt Co., Inc. ³Hydroxypropyl methylcellulose, "Methocel K15MS", available from Dow Chemical Co. ⁴"Rhodopol 23", available from R. T. Vanderbilt Co., Inc. ⁵DBE-3, a mixture containing 89% dimethyl adipate, 10% dimethyl glutarate, 0.5% dimethyl succinate, 0.1% methanol, available from E. I. du Pont de Nemours and Co. ⁶DBE, a mixture containing 17% dimethyl adipate, 66% dimethyl glutarate, 16.5% dimethyl succinate, 0.2% methanol, available from E. I. du Pont de Nemours and Co. ⁷DBE-4, a mixture containing 99.5% dimethyl succinate, 0.1% methanol, available from E. I. du Pont de Nemours and Co. ⁸ DBE-9, a mixture containing 1.5% dimethyl adipate, 73% dimethyl glutarate, 25% dimethyl succinate, 0.3% methanol, available from E. I. du Pont de Nemours and Co. ⁹Polypropylene oxide-polyethylene oxide copolymer, "Pluronic P104", available from BASF Wyandotte, Corp. | | | | | | | | | |

### Comparative Example A

A commercially available paint stripper ("Zip-Strip Paint and Varnish Remover", Non-flammable, available from the Star Bronze Company of Alliance, OH) was prepared by combining the following ingredients, in the amounts indicated, in order, followed by mixing after each addition.

| Ingredient | Parts by weight |
|---|---|
| Methylene chloride | 67.0 |
| Ethyl alcohol | 5.0 |
| Mineral spirits | 23.0 |
| Methyl alcohol | 3.0 |
| Paraffin wax/methyl cellulose | 2.0 |

### Comparative Example B

A paint stripper described in DE 3438399(supra) was prepared by combining the following ingredients, in the amounts indicated, followed by mixing after each addition.

| Ingredient | Parts by weight |
|---|---|
| Diethylene glycol monobutyl ester | 12.0 |
| Dimethyl ester of succinic acid | 15.0 |
| Dimethyl ester of glutaric acid | 45.0 |
| Dimethyl ester of adipic acid | 6.0 |
| Cellulose acetobutyrate | 2.0 |
| Alkyl benzene sulfonate | 5.0 |
| Sodium oleate | 10.0 |
| Water | 5.0 |

A circle of each composition, one centimeter in diameter, was applied to a pine board, resting in a horizontal position, which had been coated with four layers of baked oil enamel paint. After 2 1/2 hours, the compositions were wiped off, and the paint was scraped. Each layer of paint was 0.0381 millimeters in thickness. All samples were tested on the same panel in close proximity of each other. The number of layers of paint removed was recorded. The average of three trials is recorded as the rating of the effectiveness of the composition.

**TABLE II**

| Example no. | Paint removal rating |
|---|---|
| 1 | 2.0 |
| 2 | 2.6 |
| 3 | 2.1 |
| 4 | 2.0 |
| 5 | 2.0 |
| 6 | 2.2 |
| 7 | 1.9 |
| 8 | 1.8 |
| Control A | 0.0 |
| Control B | 2.7 |
| Comparative A | 4.0 |
| Comparative B | 2.2 |

The foregoing test was repeated, the only exception being that the pine board was disposed in a vertical position. All examples demonstrated a rating of at least 2.0 except for Example no. 8, which demonstrated a rating of 1.5. Controls A and B both demonstrated ratings of zero (0). These tests clearly show pure dibasic ester is not a useful paint remover for painted vertical surfaces.

FIG. 1 shows that when dibasic ester is diluted with water (line A), paint removal rate exceeds the expected paint removal rate (line B).

FIG. 2 shows that at equivalent concentrations, aqueous dibasic ester emulsions (line C) exhibit higher relative paint removal rate than aqueous mixtures of methylene chloride (line D) or N-methyl 2-pyrrolidone (line E).

### Example 9

The following ingredients in the amounts indicated were used to prepare a composition of this invention.

| Ingredient | Amount (parts by weight) |
|---|---|
| Water | 72.4 |
| Magnesium aluminum silicate ("Veegum D", available from R. T. Vanderbilt Co., Inc.) | 1.1 |
| Sorbitan monooleate ("Span 80", available from ICI Americas, Inc.) | 0.4 |
| Polyoxyethylene 20 sorbitan monooleate ("Tween 80", available from ICI Americas, Inc.) | 0.5 |
| Dibasic ester-3 (DBE-3, available from E. I. du Pont de Nemours and Co.) | 24.1 |
| Hydroxypropyl methylcellulose ("Methocel J75MS", available from Dow Chemical Co.) | 1.0 |
| Xanthan gum ("Kelzan S", available from Kelco, Inc.) | 0.5 |
| Ammonium hydroxide | to adjust pH>7 and <8 |

Water and magnesium aluminum silicate were mixed at room temperature for 30 minutes with a "Dispersator" high shear mixer. Sorbitan monooleate and polyoxyethylene sorbitan monooleate were premixed and then added to the mixture using a lightening mixer for agitation. The dibasic ester was added to the formulation with high agitation. With continued high agitation, hydroxypropylmethylcellulose was added, followed by addition of the xanthan gum. Ammonium hydroxide was then added dropwise until the emulsion had thickened.

The composition was first tested on human skin. It was later found that a ground glass plate gave results similar to that of skin. The glass was prepared by placing 240 grit silica carbide between two glass surfaces, adding some water and rubbing the glass plates back and forth. A uniform ground glass surface was obtained that was found to be a suitable substrate for testing. Coatings were applied with a brush to human skin to an area 1.9 cms x 6.35 cms (3/4" x 2½") and allowed to dry for two hours in air. Coatings applied to a glass plate with a brush covering an area 1.9 cms x 7.0 cms (3/4" x 2-3/4") and allowed to dry for 1 hour at 60°C (140°F). The skin cleaner formulation, with the aid of a Buf Puf® cleaning pad, was then used to attempt to remove each of the coatings.

**TABLE III**

| | Time for removal¹ (sec) | |
|---|---|---|
| Coating to be removed | Human skin | Ground glass plate |
| Permanent ink | 45² | 20² |
| Lacquer | 20 | 15 |
| Wood stain | 60² | 60² |
| Enamel paint | 35 | 45 |
| White latex paint | 40 | 30 |

| | | |
|---|---|---|
| ¹Percent removal was essentially 100% for time indicated. ²Very light stain remained. | | |

A comparison was made of competitive hand cleaning products. Coatings were applied to the ground glass finish and dried for 1 hour at 60°C (140°F). If the coating was not completely removed within 1 minute, the study was stopped and the percent removal was recorded. The results are shown in Table IV. N.R. means "not removed".

**TABLE IV**

| | Cleansing creams tested | | | | | | | |
|---|---|---|---|---|---|---|---|---|
| Coating to be removed | "TUF ENUF"¹ | | "GOOP"² | | "GRIT"³ | | "GO JO"⁴ | |
| | time (sec) | removal (%) | time (sec) | removal (%) | time (sec) | removal (%) | time (sec) | removal (%) |
| Permanent ink | 60 | 75 | 60 | 50 | 60 | 70 | 60 | 50 |
| Lacquer | 60 | N.R. | 60 | N.R. | 60 | 40 | 60 | 40 |
| Woo stain | 60 | 5 | 60 | 5 | 60 | 98 | 60 | N.R. |
| Enamel paint | 60 | N. R. | 60 | N. R. | 60 | 25 | 60 | N. R. |

| | | | | | | | | |
|---|---|---|---|---|---|---|---|---|
| ¹Available from Critzas Industries, St. Louis, Mo. ²Available from Critzas Industries, St. Louis, Mo. ³Available from D L Group/Banite Inc., Buffalo, N.Y. ⁴Available from Go Jo Industries, Akron, Ohio | | | | | | | | |

The formulation containing the dibasic ester was superior to competitive products tested.

A water based formulation containing 12% dibasic ester also proved effective at cleaning and performed nearly as well as the formulation containing 24% dibasic ester.

The ability of the dibasic ester to be effective at a low concentration in a water based formulation provides a cost savings. Moreover, the water-diluted product would be expected to be safer to use than a product containing a higher concentration of dibasic ester.

In order to increase the speed of the cleaning properties of the composition of this invention, it is helpful to use abrasive action. The use of a nonwoven abrasive such as a Buf Puf^{R} cleaning pad or a Brushlon^{R} scrubbing brush can increase the speed of the cleansing action of the composition of this invention.

## Claims

1. A stable emulsion for rendering organic polymer coatings removable from vertical surfaces consisting essentially of (1) at least 10% by weight of at least one dibasic ester, (2) at least 50% by weight of water, and (3) at least one thickening agent selected from water soluble and water swellable thickening agents.

2. An emulsion according to claim 1 wherein said at least one thickening agent comprises from 0.5 percent by weight to 4 percent by weight of the composition.

3. An emulsion according to any preceding claim further including a surfactant.

4. An emulsion according to claim 3 wherein the surfactant comprises up to 2 percent by weight of said composition.

5. An emulsion according to any preceding claim wherein said at least one dibasic ester is an aliphatic dibasic ester having a molecular weight equal to or less than about 200.

6. An emulsion according to any preceding claim wherein said at least dibasic ester is a dibasic ester derived from an acid selected from adipic acid, glutaric acid and succinic acid.

7. An emulsion according to any preceding claim consisting essentially of from 10 percent by weight to 50 percent by weight of at least one dibasic ester, at least 50 percent by weight water, from 0.5 percent by weight to 4 percent by weight of at least one thickening agent, and from 0 percent by weight to 2 percent by weight surfactant.

8. Use of a stable emulsion for rendering organic polymer coatings removable from vertical surfaces, the emulsion consisting essentially of a dibasic ester at least 50% by weight of water and at least one thickening agent selected from water-soluble and water-swellable thickening agents.

9. Use as claimed in claim 8 wherein the emulsion is as claimed in any of claims 1 to 7.

10. Use as claimed in claim 8 or claim 9 to render paint removable from vertical surfaces.

## Patentansprüche

1. Stabile Emulsion zum Entfernbarmachen organischer Polymerbeschichtungen von vertikalen Oberflächen, im Wesentlichen bestehend aus: (1) mindestens 10 Gewichtsprozent mindestens eines zweibasischen Esters; (2) mindestens 50 Gewichtsprozent Wasser und (3) mindestens einem Eindickungsmittel, ausgewählt aus wasserlöslichen und in Wasser quellfähigen Eindickungsmitteln.

2. Emulsion nach Anspruch 1, wobei das mindestens eine Eindickungsmittel 0,5 Gewichtsprozent bis 4 Gewichtsprozent der Zusammensetzung umfasst.

3. Emulsion nach einem der vorherigen Ansprüche, die ferner ein Tensid enthält.

4. Emulsion nach Anspruch 3, wobei das Tensid bis zu 2 Gewichtsprozent der Zusammensetzung umfasst.

5. Emulsion nach einem der vorherigen Ansprüche, wobei der mindestens eine zweibasische Ester ein aliphatischer zweibasischer Ester mit einem Molekulargewicht von gleich oder weniger als etwa 200 ist.

6. Emulsion nach einem der vorherigen Ansprüche, wobei der mindestens eine zweibasische Ester ein zweibasischer Ester ist, der von einer Säure ababgeleitet ist, welche aus Adipinsäüre, Glutarsäure und Bernsteinsäure ausgewählt ist.

7. Emulsion nach einem der vorherigen Ansprüche, die im Wesentlichen aus 10 Gewichtsprozent bis 50 Gewichtsprozent mindestens eines zweibasischen Esters, mindestens 50 Gewichtsprozent Wasser, 0,5 Gewichtsprozent bis 4 Gewichtsprozent mindestens eines Eindickungsmittels und 0 Gewichtsprozent bis 2 Gewichtsprozent Tensid besteht.

8. Verwendung einer stabilen Emulsion zum Entfernbarmachen organischer Polymerbeschichtungen von vertikalen Oberflächen, wobei die Emulsion im Wesentlichen aus einem zweibasischen Ester, mindestens 50 Gewichtsprozent Wasser und mindestens einem Eindickungsmittel, das aus wasserlöslichen und in Wasser quellfähigen Eindickungsmitteln ausgewählt ist, besteht.

9. Verwendung nach Anspruch 8, wobei die Emulsion wie in einem der Ansprüche 1 bis 7 beansprucht ist.

10. Verwendung nach Anspruch 8 oder Anspruch 9 zum Entfernbarmachen von Farbe von vertikalen Oberflächen.

## Revendications

1. Émulsion stable pour rendre les revêtements polymères organiques détachables de surfaces verticales, constituée essentiellement (1) d'au moins 10 % en poids d'au moins un ester dibasique, (2) d'au moins 50 % en poids d'eau et (3) d'au moins un agent épaississant choisi parmi des agents épaississants solubles dans l'eau et gonflant dans l'eau.

2. Émulsion selon la revendicatiorn 1, dans laquelle ledit au moins un agent épaississant comprend de 0,5 % en poids à 4 % en poids de la composition.

3. Émulsion selon l'une quelconque des revendications précédentes, qui comprend en outre un agent tensioactif.

4. Émulsion selon la revendication 3, dans laquelle l'agent tensioactif comprend jusqu'à 2 % en poids de ladite composition.

5. Émulsion selon l'une quelconque des revendications précédentes, dans laquelle ledit au moins un ester dibasique est un ester dibasique aliphatique dont le poids moléculaire est égal ou inférieur à environ 200.

6. Émulsion selon l'une quelconque des revendications précédentes, dans laquelle ledit au moins un ester dibasique est un ester dibasique dérivé d'un acide choisi parmi l'acide adipique, l'acide glutarique et l'acide succinique.

7. Émulsion selon l'une quelconque des revendications précédentes, constituée essentiellement de 10 % en poids à 50 % en poids d'au moins un ester dibasique, d'au moins 50 % en poids d'eau, de 0,5 % en poids à 4 % en poids d'au moins un agent épaississant et de 0 % en poids à 2 % en poids d'un agent tensioactif.

8. Utilisation d'une émulsion stable pour rendre les revêtements polymères organiques détachables de surfaces verticales, l'émulsion étant constituée essentiellement d'un ester dibasique, d'au moins 50 % en poids d'eau et d'au moins un agent épaississant choisi parmi des agents épaississants solubles dans l'eau et gonflant dans l'eau.

9. Utilisation selon la revendication 8, dans laquelle l'émulsion est telle que revendiquée dans l'une quelconque des revendications 1 à 7.

10. Utilisation selon la revendication 8 ou la revendication 9, pour rendre la peinture détachable de surfaces verticales.
